# DEMANDE DE BREVET EUROPEEN

(11) **EP 1 767 438 A1**
(43) Date de publication de la demande: **28.03.2007**
(21) Numéro de dépôt: 06300917.9
(22) Date de dépôt: 01.09.2006
(51) Int. Cl.: B62D 25/04

(54) **Montant de baie d'une caisse de véhicule automobile**

(30) Priorité: 21.09.2005 FR 0509628
(71) Demandeur: Renault s.a.s., 92100 Boulogne Billancourt (FR)
(72) Inventeur: Chataigner, Aurélien, 92360 Meudon la Foret (FR); Moreau, Michel, 78200 Jouy Mauvoisin (FR)

(57) **Abrégé**

L'invention concerne une caisse d'un véhicule automobile comportant une baie avant (16), ladite baie avant étant adaptée à recevoir un pare-brise (28), ladite caisse comprenant en outre des montants (18) qui sont destinés à maintenir ledit pare-brise (28), chaque montant présentant deux parois profilées (38, 42), chacune desdites parois présentant un bord libre (40, 41), lesdites parois (38, 42) étant destinées à être rapprochées l'une de l'autre pour relier ensemble les bords libres desdites parois en formant une partie tubulaire (58), selon l'invention ; ladite caisse comprend en outre, un tube de renfort (26) destiné à être engagé entre lesdites parois (38, 42) ; et lesdites parois (38, 42) dudit montant forment ensemble une seule pièce profilée (32), lesdits bords libres (40, 41) étant reliés ensemble en emprisonnant ledit tube de renfort (26) à l'intérieur de ladite partie tubulaire (58).

## Description

La présente invention se rapporte à une caisse d'un véhicule automobile munie d'une baie avant et de montants qui bordent latéralement ladite baie.

La caisse, outre la baie avant qui est adaptée à recevoir un pare-brise, présente généralement au moins deux ouvertures latérales refermées chacune par une porte. Les montants, au nombre de deux, permettent notamment de maintenir le pare-brise et ils se prolongent respectivement dans leur partie supérieure par un brancard de toit. En outre, les montants se prolongent, dans leur partie inférieure, par un pied avant qui lui-même rejoint un bas de caisse. Le pied avant reçoit généralement des moyens de fixation, ou charnières, sur lesquels lesdites portes sont montées à pivotement.

De manière connue, chacun des montants présente deux parois profilées qui s'étendent longitudinalement en regard et à l'opposé l'une de l'autre, et qui présentent deux premiers bords libres adaptés à être assemblés l'un contre l'autre dans une première phase de réalisation dudit montant. Les parois présentent également, chacune un second bord libre, les deux seconds bords libres étant destinés à être appliqués l'un contre l'autre en rapprochant les parois l'une vers l'autre, dans une seconde phase de réalisation, de manière à former une partie tubulaire.

Les deux bords libres sont soudés ensemble et forment avec la partie tubulaire une feuillure, dans laquelle la porte est susceptible de venir s'appliquer.

Un inconvénient de ce type de montants, tel qu'illustré dans le document DE 3 632 012, réside dans leur fragilité et leur manque de résistance à la déformation lorsque le véhicule subit un choc violent. Pour y pallier, il est nécessaire d'augmenter la taille des parois profilées, et par conséquent la section de la partie tubulaire, ce qui en revanche, diminue le champ visuel d'un conducteur en position normale de conduite.

Un problème qui se pose alors et que vise à résoudre la présente invention, est de fournir une caisse de véhicule automobile, dont les montants de baie avant présentent une section relativement réduite, pour ne pas occulter le champ visuel, mais dont la résistance à la déformation est néanmoins importante.

Dans le but de résoudre ce problème, la présente invention propose une caisse d'un véhicule automobile comportant une baie avant et deux ouvertures latérales, ladite baie avant étant adaptée à recevoir un pare-brise, tandis que lesdites ouvertures sont destinées à recevoir des portes, ladite caisse comprenant en outre des montants qui bordent latéralement ladite baie et qui sont destinés à maintenir ledit pare-brise, chacun desdits montants étant respectivement prolongé, dans une partie supérieure par un brancard de toit et dans une partie inférieure, par un pied avant, ledit pied avant étant adapté à recevoir des moyens de fixation de l'une desdites portes, chaque montant présentant deux parois profilées qui s'étendent longitudinalement à l'opposé l'une de l'autre, chacune desdites parois présentant un bord libre, lesdites parois étant destinées à être rapprochées l'une de l'autre pour relier ensemble les bords libres desdites parois en formant une partie tubulaire, lesdits bords libres reliés formant une feuillure avec ladite partie tubulaire ; selon l'invention, ladite caisse comprend en outre, un tube de renfort destiné à être engagé entre lesdites parois ; et lesdites parois dudit montant forment ensemble une seule pièce profilée, lesdits bords libres étant reliés ensemble en emprisonnant ledit tube de renfort à l'intérieur de ladite partie tubulaire.

Ainsi, une caractéristique de l'invention réside dans la mise en oeuvre d'un tube de renfort entre les deux parois, et à l'intérieur de la partie tubulaire, de manière, précisément, à renforcer ladite partie tubulaire formée par les deux parois. De la sorte, il n'est nul besoin d'augmenter la dimension des parois et par conséquent la section de la partie tubulaire, pour augmenter la résistance à la déformation des montants, mais simplement de monter les parois autour du tube de renfort. En outre, la mise en oeuvre des parois en une seule pièce profilée, qui est refermée sur elle-même, au niveau des bords libres, permet de simplifier la réalisation des montants.

Par ailleurs, et de façon particulièrement avantageuse ledit tube de renfort se prolonge et s'étend dans ledit pied avant de façon à relier lesdits moyens de fixation de la porte avec ledit tube de renfort. De la sorte, le pied avant est alors renforcé, et il n'est nul besoin de prévoir des moyens supplémentaires pour supporter ces moyens de fixation.

En outre, et selon un mode de mise en oeuvre de l'invention particulièrement avantageux, l'une desdites parois dudit montant présente une bordure de contact, sensiblement plane, qui est prolongée, selon une section de ladite pièce profilée, par l'un desdits bords libres, en retour, sensiblement perpendiculairement, pour former ladite feuillure avec ladite bordure de contact. De la sorte, la pièce profilée qui présente une surface externe et une surface interne, permet de réaliser, grâce à des portions de surface externe de la bordure de contact et dudit bord libre, une feuillure dans laquelle un bord de la porte est susceptible de venir s'engager lorsque la porte est dans une position fermée.

De plus, et de manière préférentielle, ladite une desdites parois est prolongée, selon ladite section de ladite pièce profilée, à l'opposé de ladite bordure de contact, par l'autre desdites parois ; une portion d'appui, sensiblement plane, de ladite autre desdites parois formant un angle aigu avec ladite bordure de contact. En outre, une autre portion de surface externe de la portion d'appui, est susceptible de recevoir en applique, le pare-brise ainsi qu'on l'expliquera ci-après dans la description détaillée.

En outre, ladite autre desdites parois présente, de façon avantageuse, une partie flexible qui prolonge ladite portion d'appui, l'autre desdits bords libres et ladite partie flexible étant séparés par un décrochement. Par ailleurs, ladite partie flexible présente une bordure rigide sensiblement plane qui longe ledit décrochement.

De la sorte, et notamment grâce au décrochement, ledit autre desdits bords libres est appliqué à plat sur ledit un desdits bords libres en fléchissant ladite partie flexible, ladite bordure rigide formant alors un angle sensiblement aigu d'une part avec ladite portion d'appui, et d'autre part avec ladite bordure de contact, de sorte que, ladite partie tubulaire présente avantageusement une section sensiblement triangulaire.

Avantageusement, ledit tube de renfort présente au moins une portion de section sensiblement triangulaire de manière à ce que, la bordure de contact, la portion d'appui et la bordure origine viennent respectivement s'appliquer contre les parois du tube de renfort.

De manière préférentielle, ledit tube de renfort et ladite pièce profilée sont fixés ensemble, au moins la bordure de contact et la portion d'appui sont fixées auxdites parois du tube de renfort. Ils forment alors un sous-ensemble apte à être fixé sur la caisse du véhicule.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle de côté d'une caisse de véhicule automobile conforme à l'invention ;
- la Figure 2 est une vue schématique en coupe droite selon le plan II-II illustré sur la Figure 1, d'un élément de détail, et auquel ont été ajoutés, en vue partielle, d'autres éléments ;
- la Figure 3 est une vue schématique d'un élément illustré sur la Figure 2, dans une première phase de mise en oeuvre ; et,
- la Figure 4 est une vue en coupe droite selon le plan IV-IV représenté sur la Figure 1, d'un autre élément de détail.

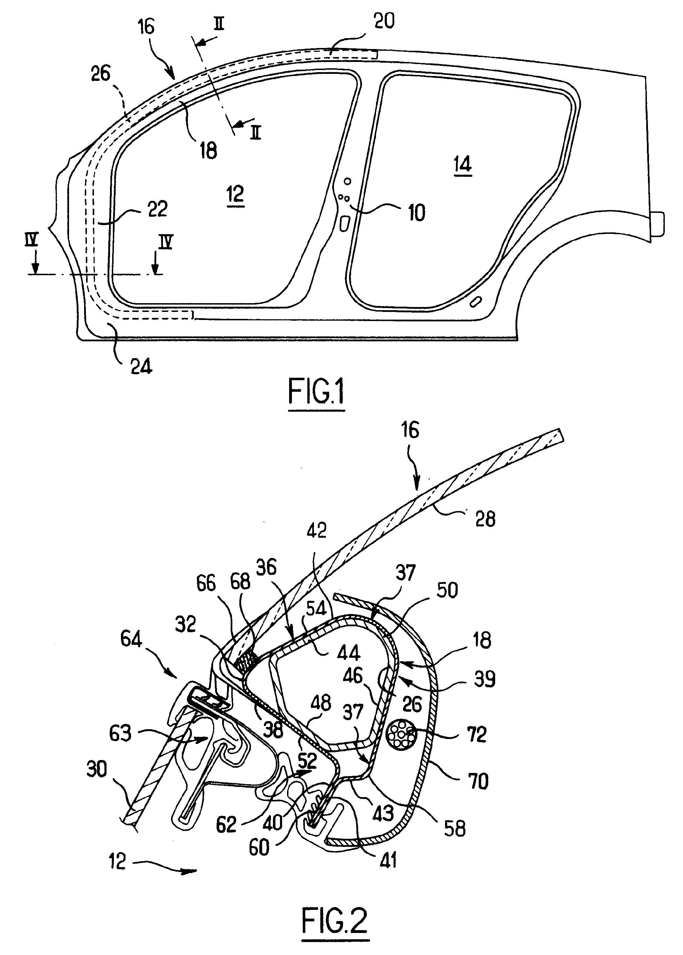

La Figure 1 illustre partiellement en vue de côté droit, une caisse 10 de véhicule automobile. Cette caisse 10 présente une ouverture latérale avant 12, une ouverture latérale arrière 14 et une baie avant 16. La caisse 10 présente également un montant 18 qui se prolonge dans la partie supérieure par un brancard de toit 20 et dans la partie inférieure, par un pied avant 22 qui lui-même rejoint un bas de caisse 24. Par ailleurs, la caisse 10 comporte un tube de renfort 26 qui est ici représenté en traits interrompus car logé dans l'épaisseur de la caisse 10 ou derrière la caisse illustrée sur la Figure 1, et qui s'étend de manière recourbée, du brancard de toit 20 jusque dans le bas de caisse 24 en suivant un contour de l'ouverture latérale avant 12 et en traversant le montant 18.

On retrouve, en coupe, sur la Figure 2, le tube de renfort 26 et le montant 18 ainsi que la baie avant 16 dans laquelle est ici monté un pare-brise panoramique 28. L'ouverture latérale avant 12 est ici refermée par une porte 30 partiellement représentée et qui s'étend sensiblement dans le prolongement du pare-brise 28 pour former avec lui une surface courbe sensiblement régulière.

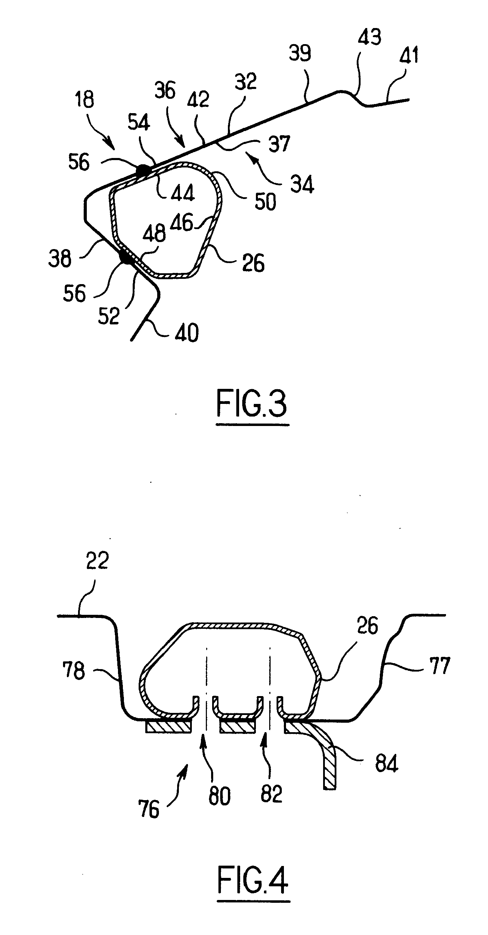

On détaillera tout d'abord en référence à la Figure 3, la réalisation du montant 18 avec le tube de renfort 26.

Après un premier emboutissage, la caisse 10 présente une partie, correspondant au futur montant 18, formée d'une seule pièce profilée 32, sensiblement en V, laquelle présente une surface interne 34 et une surface externe 36. Cette pièce profilée 32 présente deux parois profilées, une première paroi 38 qui se termine par un premier bord libre 40 en retour, et une seconde paroi 42 qui présente elle, une partie flexible 37, une bordure rigide 39 et qui se termine par un second bord libre 41, séparé de la bordure rigide 39 par un décrochement 43.

Par ailleurs, le tube de renfort 26 ici représenté en coupe droite présente une forme sensiblement triangulaire, avec deux côtés opposés 44 et 46, symétriques l'un de l'autre, et une base 48 sensiblement en U opposée à une pointe arrondie 50.

Dans une première phase de mise en oeuvre du montant 18, le tube de renfort 26 est appliqué dans la pièce profilée 32 de manière à ce que la base 48 soit située en appui d'une bordure de contact 52 de la première paroi 38, et contre une portion de surface interne 34, tandis que l'un des deux côtés opposés 44 est appliqué contre une portion d'appui 54 de la seconde paroi 42 dans une autre portion de surface interne 34. Par ailleurs, la bordure de contact 52 et la base 48 sont soudées ensemble par point 56 tout comme ledit un des deux côtés opposés 44 et la portion d'appui 54.

Ensuite, dans une deuxième phase de mise en oeuvre, la seconde paroi 42 va être pliée et formée autour du tube de renfort 26, la partie flexible 37 fléchissant et épousant la forme de la pointe arrondie 50, tandis que la bordure rigide 39 vient s'appliquer contre l'autre desdits côtés opposés 46 et le second bord libre 41, à plat contre le premier bord libre 40 ; la pièce profilée 32 forme alors une partie tubulaire 58 qui est illustrée ainsi formée sur la Figure 2.

Ainsi que le montre la Figure 2, le tube de renfort 26 est entièrement logé à l'intérieur de la partie tubulaire 58 qui l'enrobe. Le tube de renfort 26 permet alors de rigidifier la partie tubulaire 58 dont la section est relativement faible mais dont la résistance à la déformation demeure relativement importante. On retrouve sur cette Figure 2 tous les éléments illustrés sur la Figure 3, les deux bords libres 40, 41 étant assemblés par soudure ou rivetage, en une seule aile libre 60 qui forme alors un angle sensiblement droit avec la bordure de contact 52, tous deux formant alors une feuillure 62 adaptée à recevoir un bord 64 de la porte 30. Le bord 64 est équipé de premiers moyens formant joint 63, tandis que l'aile libre 60 est équipée de seconds moyens formant joint 65 adaptés à coopérer avec les premiers, de manière à ce que le bord 64 puisse venir s'engager dans la feuillure 62 de manière étanche. En outre, le pare-brise 28 présente un bord latéral à 66 qui est collé le long de la portion d'appui 54 au voisinage de la jointure entre la première paroi 38 et la seconde paroi 42 grâce, par exemple, à un cordon de mastic 68.

Par ailleurs, le montant 18, est susceptible d'être recouvert d'une garniture 70, qui s'étend à l'intérieur du véhicule automobile, du pare-brise 28 jusqu'à l'aile libre 60 en masquant également un faisceau de câbles 72 qui longe la partie tubulaire 58. Ainsi, le montant 18 malgré la garniture 70, est relativement mince de sorte qu'il n'occulte pas le champ visuel du conducteur.

En outre, et tel que le montre la Figure 1, le tube de renfort 26 s'étend partiellement autour de l'ouverture et renforce ainsi le côté de la caisse 10. En particulier, il permet de renforcer le pied avant 22 et également de fixer la porte 30. On se référera maintenant à la Figure 4, qui illustre des moyens de fixation 76 de la porte.

On retrouve sur cette Figure 4, le pied avant 22 de la caisse 10 qui présente une paroi 77 dans laquelle est ménagé un renfoncement externe 78 et à l'intérieur duquel s'étend le tube de renfort 26. Ce dernier est sensiblement aplati dans cette partie de pied avant 22, de manière à venir s'appliquer à plat contre une paroi de caisse à l'intérieur du renfoncement externe 78, et au moins deux orifices, 80, 82 sont pratiqués à travers la paroi 77 et le tube de renfort 26 de manière à venir fixer une platine de charnière 84, par exemple, avec des écrous noyés du type «RIVKLE ». La paroi 77 est alors prise en sandwich entre la platine de charnière 84 et le tube de renfort 26 dans cette partie de pied avant 22.

On notera que la platine de charnière 84, la paroi 77 et le tube de renfort 26 sont susceptibles d'être assemblés également par fluotaraudage, ce qui diminue alors le nombre de pièces nécessaires à l'assemblage.

Ainsi, le tube de renfort 26 qui est solidaire de façon rigide de la caisse 10 et en particulier du pied avant 22, permet de supporter au moins une platine de charnière 84 et par conséquent la porte, sans qu'il soit nécessaire de renforcer plus encore le pied avant 22.

## Revendications

1. Caisse (10) d'un véhicule automobile comportant une baie avant (16) et deux ouvertures latérales (12), ladite baie avant étant adaptée à recevoir un pare-brise (28), tandis que lesdites ouvertures sont destinées à recevoir des portes (30), ladite caisse comprenant en outre des montants (18) qui bordent latéralement ladite baie (16) et qui sont destinés à maintenir ledit pare-brise (28), chacun desdits montants (18) étant respectivement prolongé, dans une partie supérieure par un brancard de toit (20) et dans une partie inférieure, par un pied avant (22), ledit pied avant étant adapté à recevoir des moyens de fixation (76) de l'une desdites portes (30), chaque montant présentant deux parois profilées (38, 42) qui s'étendent longitudinalement à l'opposé l'une de l'autre, chacune desdites parois présentant un bord libre (40, 41), lesdites parois (38, 42) étant destinées à être rapprochées l'une de l'autre pour relier ensemble les bords libres desdites parois en formant une partie tubulaire (58), lesdits bords libres (40, 41) reliés formant une feuillure (62) avec ladite partie tubulaire ;
**caractérisée en ce que** ladite caisse comprend en outre, un tube de renfort (26) destiné à être engagé entre lesdites parois (38, 42) ;
et **en ce que** lesdites parois (38, 42) dudit montant forment ensemble une seule pièce profilée (32), lesdits bords libres (40, 41) étant reliés ensemble en emprisonnant ledit tube de renfort (26) à l'intérieur de ladite partie tubulaire (58).

2. Caisse de véhicule automobile selon la revendication 1, **caractérisée en ce que** ledit tube de renfort (26) s'étend dans ledit pied avant (22) de façon à relier lesdits moyens de fixation (76) avec ledit tube de renfort (26).

3. Caisse de véhicule automobile selon la revendication 1 ou 2, **caractérisée en ce que** l'une desdites parois (38) dudit montant présente une bordure de contact (52) qui est prolongée, selon une section de ladite pièce profilée (32), par l'un desdits bords libres (40), en retour pour former ladite feuillure (62).

4. Caisse de véhicule automobile selon la revendication 3, **caractérisée en ce que** ladite une desdites parois (38) est prolongée, selon ladite section de ladite pièce profilée, à l'opposé de ladite bordure de contact (52), par l'autre desdites parois (42), une portion d'appui (54) de ladite autre desdites parois formant un angle aigu avec ladite bordure de contact (52).

5. Caisse de véhicule automobile selon la revendication 4, **caractérisée en ce que** ladite autre desdites parois (42) présente une partie flexible (37) qui prolonge ladite portion d'appui (54), l'autre desdits bords libres (41) et ladite partie flexible (37) étant séparés par un décrochement (43).

6. Caisse de véhicule automobile selon la revendication 5, **caractérisée en ce que** ledit autre desdits bords libres (41) est appliqué sur ledit un desdits bords libres (40) en fléchissant ladite partie flexible (37).

7. Caisse de véhicule automobile selon l'une quelconque des revendications 1 à 6, **caractérisée en ce que** ladite partie tubulaire (58) présente une section sensiblement triangulaire.

8. Caisse de véhicule automobile selon l'une quelconque des revendications 1 à 7, **caractérisée en ce que** ledit tube de renfort (26) présente au moins une portion de section sensiblement triangulaire.

9. Caisse de véhicule automobile selon l'une quelconque des revendications 1 à 8, **caractérisée en ce que** ledit tube de renfort (26) et ladite pièce profilée (32) forment un sous-ensemble apte à être fixé sur la caisse du véhicule.
